Europäisches Patentamt

European Patent Office

Office européen des brevets

(11) Numéro de publication: **0 132 183**
**A1**

(12) **DEMANDE DE BREVET EUROPEEN**

(21) Numéro de dépôt: **84401370.6**

(22) Date de dépôt: **27.06.84**

(51) Int. Cl.⁴: **G 06 K 19/06**

(30) Priorité: **29.06.83 FR 8310737**

(43) Date de publication de la demande:
**23.01.85 Bulletin 85/4**

(84) Etats contractants désignés:
**DE GB IT**

(71) Demandeur: **SLIGOS**
**91 rue Jean-Jaurès**
**F-92807 Puteaux Cedex(FR)**

(72) Inventeur: **Eymard, Pierre**
**174, rue du Général Leclerc**
**F-95120 Ermont(FR)**

(74) Mandataire: **Bouju, André**
**38 Avenue de la Grande Armée**
**F-75017 Paris(FR)**

(54) **Procédé pour la fabrication de cartes à mémoire, installation et cartes à mémoire obtenues.**

(57) Suivant le procédé on réalise dans une feuille (1) en matière thermoplastique par thermo-emboutissage, une série de cavités (6) régulièrement espacées recevant chacune un microprocesseur (27), on dépose à l'intérieur de ces cavités (6) un revêtement métallique (11), on applique par impression des pistes magnétiques (15) sur la face de la feuille opposée aux cavités (6), et on imprime l'autre face de la feuille.

On applique ensuite un vernis thermoplastifiable (19, 20) sur les deux faces de la feuille (1) sauf dans les cavités (6), on découpe les cartes à mémoire (10) dans la feuille ainsi obtenue et on introduit et fixe dans les cavités (6) les microprocesseurs (27) en forme de pastille.

Utilisation notamment pour réaliser des cartes à mémoire destinées à l'enregistrement des données bancaires.

FIG. 12

EP 0 132 183 A1

## "Procédé pour la fabrication de cartes à mémoire, installation et cartes à mémoire obtenues"

La présente invention concerne un procédé pour la fabrication de cartes à mémoire, notamment destinées à l'enregistrement de données pour des usages bancaires ou autres, à partir d'une feuille de matière plastique, telle que du polychlorure de vinyle.

L'invention vise également les cartes à mémoire ainsi obtenues et une installation pour les fabriquer.

Les cartes à mémoire connues sont réalisées à partir de plusieurs feuilles de chlorure de polyvinyle superposées, qui sont soit prédécoupées aux dimensions de la carte à l'emporte-pièce, soit embouties sous pression à l'aide d'un outil comportant un poinçon et une matrice.

La feuille centrale de cet assemblage complexe, comporte un évidement qui la traverse de part en part constituant un logement pour recevoir un microprocesseur en forme de pastille. Cette feuille centrale est ainsi prise en sandwich entre deux feuilles extérieures fixées à la feuille centrale par thermocollage ou analogue.

L'une des faces extérieures de la carte à savoir le recto de celle-ci reçoit des inscriptions et/ou un graphisme de personnalisation de la carte et l'autre, c'est-à-dire le verso comporte une piste magnétique imprimée.

La Demanderesse a constaté que les cartes à mémoire connues présentaient les deux inconvénients majeurs ci-après :

Lors de la fabrication des cartes, la matière plastique est soumise à une plastification à une température comprise entre 130 et 140°C qui provoque un dégagement de gaz qui est nocif à l'égard du microprocesseur logé dans l'évidement de la carte.

Par ailleurs, la piste magnétique subit lors de l'impression sous pression de la carte, des déformations dues au fait qu'elle est située en regard de l'évidement renfermant le microprocesseur, qui peuvent entraîner des perturbations, notamment lors de la lecture des données inscrites dans cette piste magnétique.

En outre, lors de la fabrication de ces cartes, les microprocesseurs sont introduits manuellement dans les cartes, ce qui exige un personnel très adroit et qualifié et affecte ainsi considérablement le coût de fabrication de ces cartes.

Le but de la présente invention est de remédier aux inconvénients des réalisations connues, en proposant un procédé qui simplifie considérablement la fabrication des cartes à mémoire et augmente notablement leur fiabilité, tout en réduisant leur coût de fabrication.

Dans le procédé pour fabriquer des cartes à mémoire visé par l'invention, on utilise une feuille de matière plastique dans laquelle on incorpore un microprocesseur en forme de pastille, on applique sur l'une des faces de la feuille une piste magnétique et on imprime sur l'autre face un texte, des chiffres et éventuellement un graphisme.

Suivant l'invention, ce procédé est caractérisé par les étapes suivantes :

- On réalise dans la feuille en matière thermoplastique par thermo-emboutissage, une série de cavités régulièrement espacées destinées à recevoir chacune un microprocesseur sous forme de pastille,

- On dépose à l'intérieur des cavités, un revêtement métallique,

- On applique par impression, des pistes magnétiques sur la face de la feuille opposée aux cavités et en regard de celles-ci,

- On imprime l'autre face de la feuille,

- On applique un vernis thermoplastifiable sur les deux faces de la feuille, sauf dans les cavités,

- On découpe les cartes à mémoire dans la feuille ainsi obtenue, et

- On introduit et fixe dans les cavités, les microprocesseurs en forme de pastille.

Du fait que les cavités thermoformées dans la feuille sont recouvertes intérieurement par un revêtement métallique, les microprocesseurs logés à l'intérieur de ces cavités ne risquent pas d'être dégradés par les vapeurs nocives formées lors de la plastification de la matière plastique adjacente à ces cavités.

Par ailleurs, ce procédé évite l'opération délicate et coûteuse d'application sur les deux faces de la feuille pourvues d'une cavité, d'une feuille extérieure en matière plastique.

En effet, dans le cas de l'invention, cette opération est remplacée par l'application sur les deux faces de la feuille d'une fine couche de vernis thermoplastifiable.

Le procédé conforme à l'invention est ainsi de mise en oeuvre très simple et il permet d'augmenter considérablement la fiabilité des cartes à mémoire obtenues.

Selon une version avantageuse de l'invention, le revêtement métallique est appliqué à l'intérieur des cavités, par pression mécanique à chaud d'une pellicule métallique portée par une feuille de matière plastique.

Cette opération est de mise en oeuvre particulièrement pratique et permet d'appliquer un revêtement métallique dont l'épaisseur est parfaitement controlée et permettant ainsi d'obtenir une excellente fiabilité.

Selon une version préférée de l'invention, lors de l'impression des pistes magnétiques, on presse sur l'autre face de la feuille en matière plastique, un support plan comportant des tétons engagés dans les cavités et présentant une forme complémentaire de celle de ces dernières.

On évite ainsi toute déformation de la piste magnétique susceptible de perturber la lecture de celle-ci.

Selon une version très pratique de l'invention, pour fixer les microprocesseurs en forme de pastille dans les cavités on procède comme suit :

On place au-dessus des cartes découpées dans la feuille, une bande portant des microprocesseurs régulièrement espacés, on déplace les cartes en regard de cette bande et dès

4

qu'un microprocesseur est situé au droit d'une cavité d'une carte, on presse la bande sur la carte pour pousser le microprocesseur dans la cavité et libérer celui-ci de la bande, puis on procède de la même façon pour les microprocesseurs et les cartes suivants, en déplaçant en continu la bande et les cartes.

Cette opération peut être exécutée d'une manière entièrement automatique, au moyen d'une machine qui évite l'utilisation d'une main d'oeuvre hautement qualifiée.

Selon un autre aspect de l'invention, l'installation pour fixer automatiquement et en continu des microprocesseurs en forme de pastille dans les cartes découpées obtenues selon le procédé conforme à l'invention, comprend des moyens pour déplacer en continu suivant un trajet sensiblement horizontal des cartes découpées et munies d'une cavité pour recevoir un microprocesseur, entre une entrée d'alimentation des cartes et une sortie de collecte des cartes terminées, des moyens pour déposer un adhésif au fond de la cavité des cartes, des moyens pour déplacer une bande portant des microprocesseurs régulièrement espacés au-dessus du trajet des cartes et des moyens pour presser cette bande contre les cartes successives pour introduire le microprocesseur dans chaque cavité des cartes.

Selon un troisième aspect de l'invention, la carte à mémoire obtenue notamment selon le procédé conforme à l'invention, comprenant une feuille de matière plastique dans laquelle il est incorporé un microprocesseur en forme de pastille, l'une des faces de la feuille comportant une piste magnétique et l'autre face des inscriptions et éventuellement un graphisme, est caractérisée en ce que la feuille comporte une cavité dans laquelle est encastré le microprocesseur, le fond et la face latérale de cette cavité étant revêtus par une couche métallique, en ce que la face du microprocesseur opposées au fond de la cavité est située sensiblement dans le prolongement de la face extérieure de la feuille et en ce que cette face ainsi que la face de la feuille portant la piste magnétique sont recouver-

tes par un revêtement en matière plastique.

D'autres particularités et avantages de l'invention apparaîtront encore dans la description ci-après.

Aux dessins annexés donnés à titre d'exemples non limitatifs :

- la figure 1 est une vue schématique en coupe longitudinale illustrant l'étape de thermo-emboutissage des cavités dans une feuille continue de matière plastique,

- la figure 2 est une vue en plan partielle de la feuille de matière plastique comportant les cavités embouties,

- la figure 3 est une vue en coupe longitudinale partielle de la feuille comportant une cavité emboutie et des moyens permettant d'appliquer un revêtement métallique dans cette cavité,

- la figure 4 est une vue analogue à la figure 3 montrant le revêtement métallique appliqué dans la cavité,

- la figure 5 est une vue en coupe longitudinale de la feuille illustrant une étape d'impression,

- la figure 6 est une vue analogue à la figure 5, montrant l'application d'un revêtement de matière plastique sur l'une des faces de la feuille,

- la figure 7 est une vue en coupe longitudinale de la feuille revêtue sur ses deux faces par un revêtement en matière plastique,

- la figure 8 est une vue en plan partielle de la feuille schématisant le découpage de celle-ci en cartes élémentaires,

- la figure 9 est une vue en plan partielle d'une bande portant des microprocesseurs,

- la figure 10 est une vue en coupe longitudinale partielle et à échelle agrandie, montrant un microprocesseur porté par la bande,

- la figure 11 est une vue en coupe longitudinale partielle de deux cartes et des moyens pour fixer un microprocesseur dans leur cavité,

- la figure 12 est une vue en coupe longitudinale d'une carte à mémoire terminée,

- la figure 13 est une vue en coupe à plus grande échelle de la zone comportant la cavité et le microprocesseur de cette carte,

- la figure 14 est une vue en perspective d'une installation conforme à l'invention,

- la figure 15 est une vue schématique en élévation de cette installation.

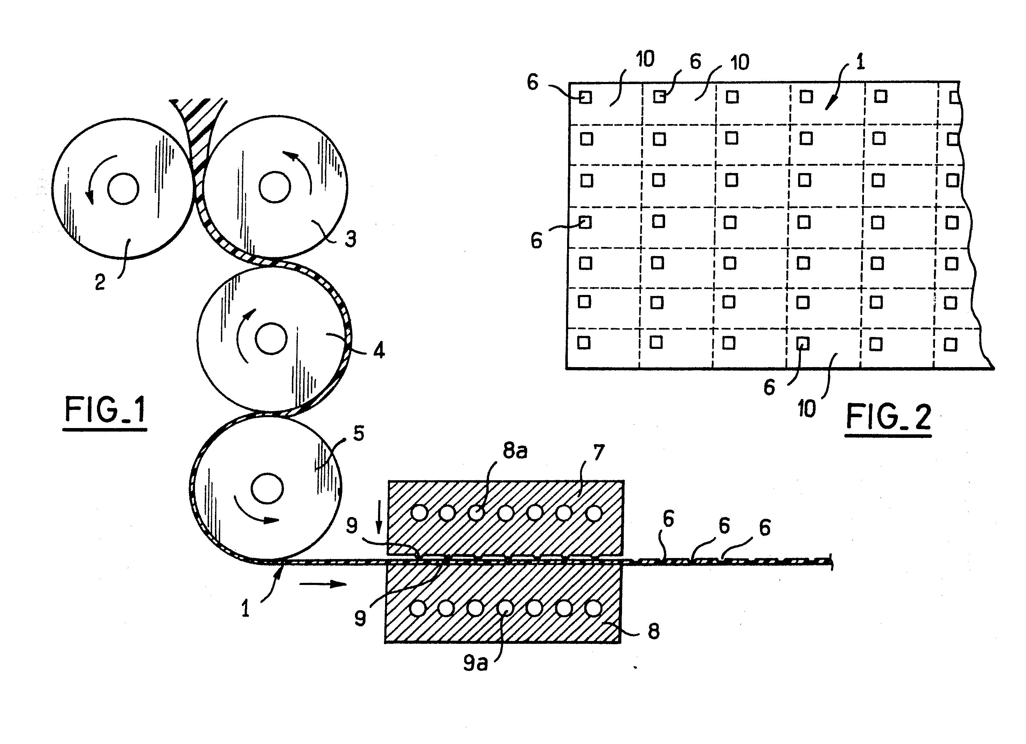

Pour fabriquer une carte à mémoire, conformément à l'invention, on part d'une feuille en matière thermoplastique 1 (voir figure 1), telle que du polychlorure de vinyle, qui est formée en continu entre des rouleaux 2, 3, 4 et 5.

Dans une première étape du procédé selon l'invention, on réalise dans la feuille en matière thermoplastique 1, une série de cavités 6 (voir également figure 2) régulièrement espacées destinées à recevoir chacune un microprocesseur, comme on l'expliquera en détail plus loin.

Cette opération est réalisée en continu et de façon automatique en faisant défiler la feuille 1 à l'état non encore durci entre deux matrices 7, 8 dont l'une 7 comporte des têtons 9 destinés à former les cavités 6 par thermo-emboutissage de la feuille 1. Ces deux matrices 7, 8 comportent des canaux 8a, 9a pour permettre la circulation d'un fluide de refroidissement.

Comme on le voit sur la figure 2, les cavités 6 sont espacées les des autres dans le sens de la longueur et de la largeur de la feuille 1, suivant des distances qui correspondent aux dimensions des cartes 10 (représentées en pointillés) qui seront découpées ultérieurement dans la feuille 1.

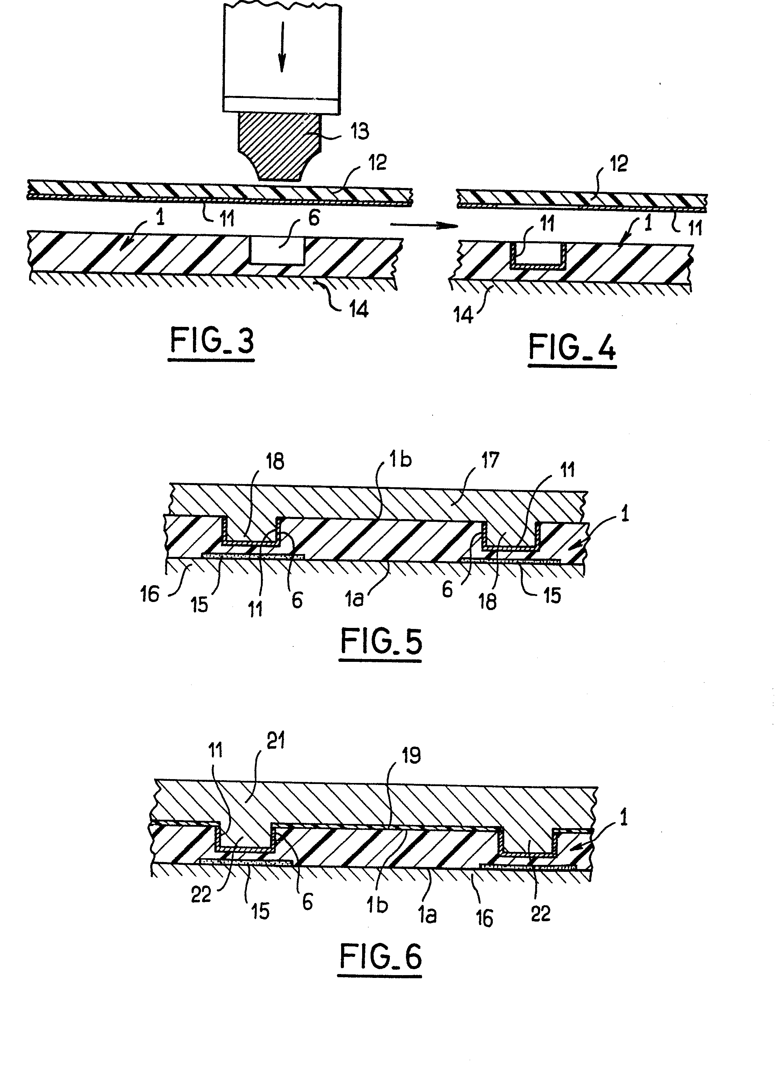

Dans une seconde étape (voir figures 3 et 4), on dépose à l'intérieur de chaque cavité 6 un revêtement métallique 11 par exemple en aluminium, en argent ou en alliage de nickel et de chrome.

Dans l'exemple représenté sur les figures 3 et 4, le revêtement métallique 11 est appliqué à l'intérieur de la cavité 6, par pression mécanique à chaud d'une pellicule métallique

11 portée par une feuille de matière plastique 12. Cette opération est réalisée en pressant la feuille 12 portant la pellicule métallique 11 dans la cavité 6, au moyen d'un poinçon 13 placé en regard de la cavité 6 ménagée dans la feuille 1 qui repose sur une surface plane 14. Ce poinçon 13 est porté à une température suffisante de façon que lorsque la pellicule métallique 11 et la feuille 12 sont pressées dans la cavité 6, la portion de pellicule métallique 11 emboutie et découpée dans la cavité 6 se détache de la feuille de matière plastique 12 et reste en place dans la cavité 6, comme indiqué sur la figure 4.

Cette opération est bien entendu effectuée successivement et automatiquement sur l'ensemble des cavités 6.

Dans une troisième opération (voir figure 5), on applique par impression une piste magnétique 15 sur la face 1a de la feuille opposée aux cavités 6 et en regard de chacune de celles-ci. Lors de cette opération, la feuille 1 est pressée contre le support d'impression plan 16, au moyen d'un support plan 17 appliqué sur l'autre face 1b de la feuille 1 et pourvu de tétons 18 engagés dans les cavités 6 et présentant une forme complémentaire de celles-ci.

Ces tétons 18 engagés dans les cavités 6 évitent toute déformation de la matière plastique dans la zone où est imprimée la piste magnétique 15.

Dans une autre étape ou en même temps que l'étape précédente, on imprime sur la face 1b de la feuille 1 un texte, des chiffres et/ou un graphisme de personnalisation de la carte.

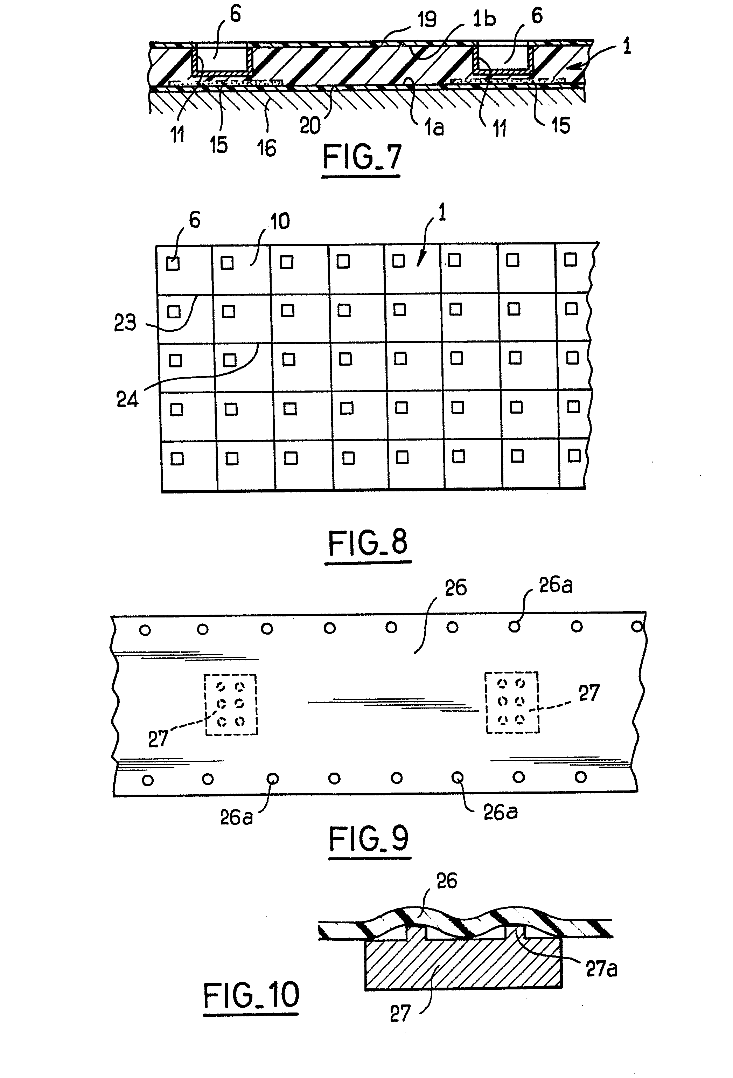

On applique ensuite sur les deux faces 1b (figure 6) et 1a (figure 7) un revêtement 19, 20 ou un vernis plastifiable par exemple en résine polyuréthane. La plastification du revêtement 19, 20 est effectuée en appliquant sur le revêtement une presse chauffante. Dans le cas du revêtement 19 on utilise une presse chauffante 21 (voir figure 6) présentant des tétons 22 pouvant s'engager dans les cavités 6 de manière à éviter toute déformation de la matière plastique. Lors de cette opération, on évite de revêtir les cavités 6.

Dans une opération ultérieure (voir figure 8) on découpe dans la feuille 1, des cartes 10 suivant les lignes 23 et 24 perpendiculaires, de façon que chaque carte 10 présente une cavité 6.

On fixe ensuite les microprocesseurs dans les cavités 6 des cartes 10. A cet effet, on procède comme suit :

On place (voir figure 9, 10 et 11) au-dessus des cartes 10 posées sur une surface plane horizontale 25, une bande 26 portant des microprocesseurs 27 en forme de pastille régulièrement espacés sur cette bande, ces microprocesseurs 27 étant orientés vers la surface des cartes 10 présentant la cavité 6.

On déplace la surface horizontale 25 portant les cartes 10 (voir flèche F) parallèlement à la bande 26 et dès qu'un microprocesseur 27 est situé au droit d'une cavité 6 d'une carte 10, on presse la bande 26 au moyen d'un poussoir 28 sur la carte 10 afin de pousser le microprocesseur 27 dans la cavité 6. Le microprocesseur 27 est retenu à la bande 26 par sa face comportant les plots de contact 27a, par simple collage ou moyens de fixation temporaire analogues. De ce fait, une fois le microprocesseur engagé dans la cavité 6, après retrait du poussoir 28, la bande 26 se sépare du microprocesseur 27 est celui-ci reste en place dans la cavité 6 de la carte 10.

La fixation du microprocesseur 27 dans la cavité 6 est améliorée en prévoyant d'introduire au fond de la cavité 6, avant la mise en place du microprocesseur 27, un adhésif approprié 29.

Le microprocesseur 27 suivant porté par la bande 26 est ensuite placé dans la carte suivante 10, comme décrit ci-dessus, après déplacement de la surface 25 portant les cartes 10 et de la bande 26.

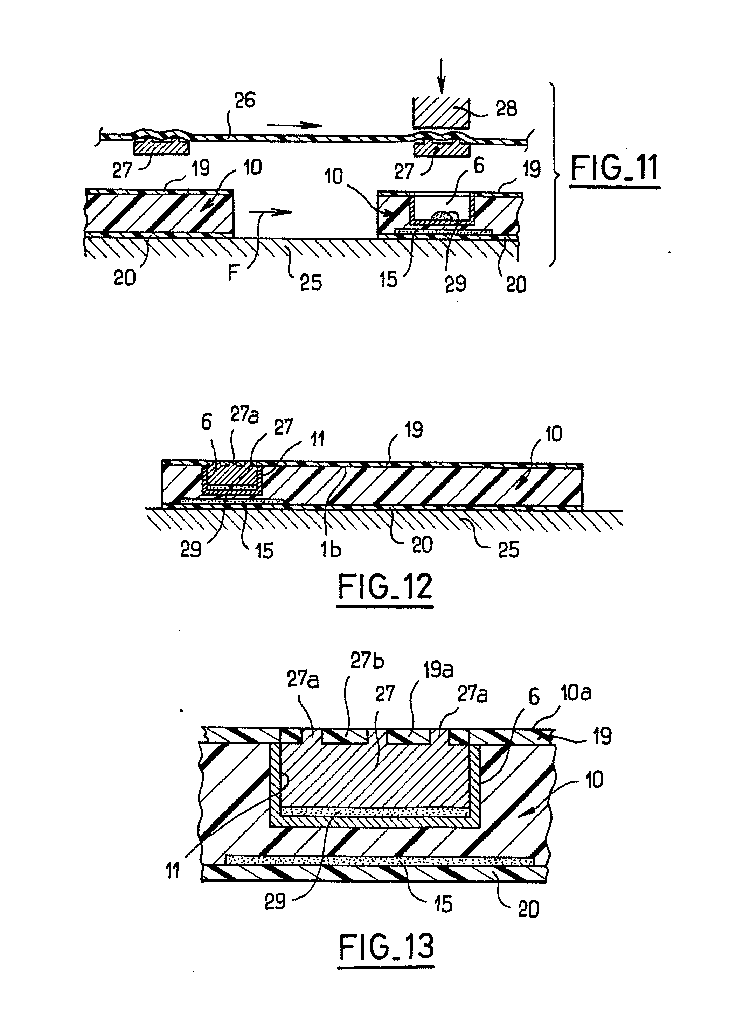

Les figures 12 et 13 représentent une carte 10 terminée. On voit sur ces figures que le microprocesseur 27 en forme de pastille est encastré dans la cavité 6 dont le fond et la face latérale sont protégés par le revêtement métallique 11.

Par ailleurs, la face 1b de la carte 10 recouvert par le revêtement 19 est située dans le prolongement de la surface du microprocesseur 27 sur laquelle font saillie ses plots de contact 27a. Ces plots de contact 27a présentent une hauteur qui est sensiblement égale à l'épaisseur du revêtement 19 qui est lui-même de l'ordre de 40 microns.

Ainsi, l'extrémité libre des plots de contact 27a dont la surface latérale est noyée dans le revêtement 19a se trouve sensiblement dans le prolongement de la surface extérieure 10a de la carte 10.

Dans une opération finale on peut protéger la surface 27b dirigée vers l'extérieur du microprocesseur 27 par une couche 19a, par exemple de résine polyuréthane, analogue à celle du revêtement 19 pour rétablir la continuité de ce dernier au-dessus du microprocesseur 27. La couche 19a peut être déposée au moyen d'un masque sérigraphique afin d'éviter le recouvrement des extrémités libres des plots de contact 27a.

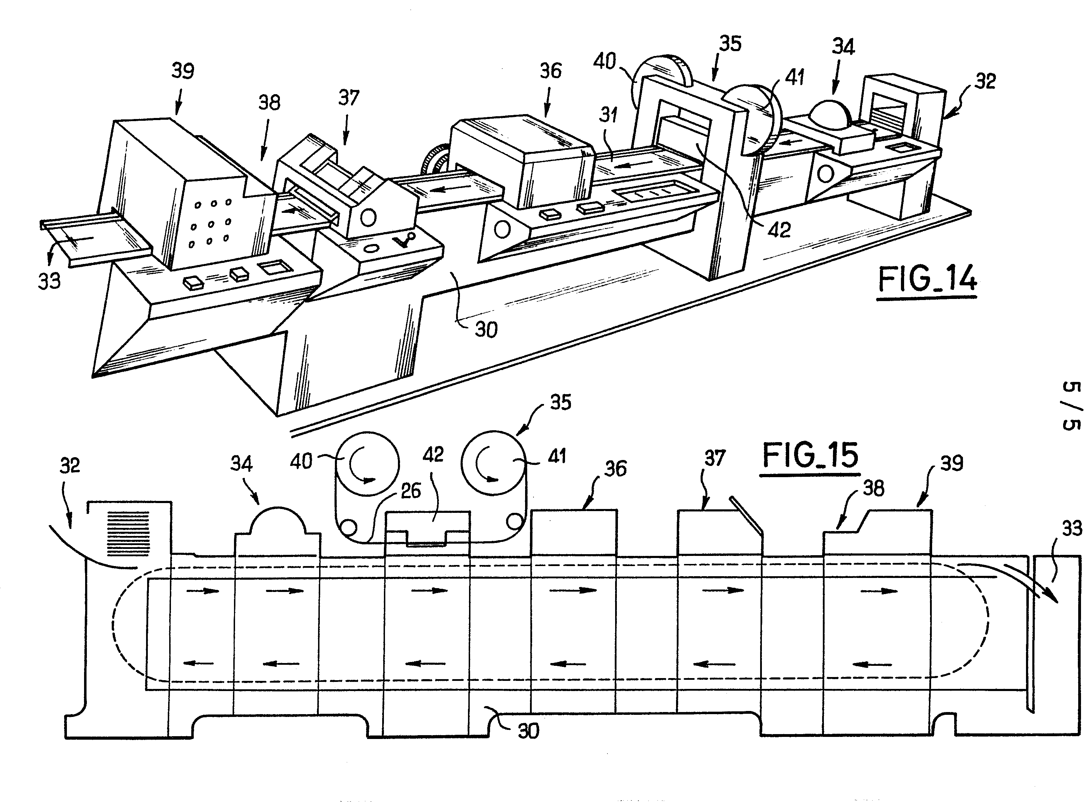

Les figures 14 et 15 représentent une installation permettant d'exécuter automatiquement et en continu un certain nombre des opérations du procédé que l'on vient de décrire.

Cette installation comporte un bâti 30 portant un tapis 31 se déplaçant en continu suivant un plan horizontal. Ce tapis 31 est destiné à porter les cartes 10 prédécoupées et munies de cavités 6 et a les déplacer en continu les unes à la suite des autres entre une entrée d'alimentation 32 et une sortie 33 de collecte des cartes terminées.

Lors de ce trajet, les cartes 10 passent successivement :

- sous un dispositif 34 qui dépose au fond de la cavité 6 de chaque carte 10, une goutte d'adhésif 29 (comme indiqué sur la figure 11),

- sous un dispositif 35 qui déplace en continu au-dessus des cartes 10 la bande 26 portant les microprocesseurs 27 et les pousse dans les cavités 6 des cartes 10, comme indiqué également sur la figure 11,

- sous un dispositif 36 (facultatif) pour établir des sou-

dures pour raccorder les connections électriques des cartes 10,

   - sous un dispositif sérigraphique 37 pour appliquer sur la surface extérieure pourvue des plots de contact 27a des microprocesseurs 27 logés dans les cavités 6 des cartes, un vernis de protection 19a (voir figure 13),

   - sous un dispositif de séchage 38 par rayonnement ultraviolet et

   - sous un dispositif de séchage final 39.

   Pour la clarté de la représentation, le dispositif 35 est disposé sur la figure 15 dans le sens du déplacement des cartes 10 alors qu'il est transversal à ce dernier sur la figure 14.

   Ce dispositif 35 comprend deux bobines 40, 41 sur lesquelles se déroule et s'enroule respectivement la bande 26 qui porte les microprocesseurs 27. Cette bande 26 est pourvue le long de ses bords longitudinaux de trous 26a (voir figure 9) qui s'engrènent avec des rouleaux dentés non représentés facilitant le guidage et le déplacement de cette bande 26. Cette dernière comporte une portion horizontale qui s'étend à une faible distance au-dessus du trajet horizontal des cartes 10 portées par le tapis 31.

   Cette bande 26 passe à l'intérieur d'un boîtier 42 dans lequel est situé le poussoir 28 (voir figure 11) qui permet d'enfoncer successivement les microprocesseurs 27 dans les cavités 6 des cartes 10.

   Les principaux avantages des cartes à mémoire 10 fabriquées selon le procédé et l'installation conformes à l'invention que l'on vient de décrire sont les suivants.

   La couche métallique 11 qui sépare le microprocesseur 27 de la matière plastique constituant la carte 10 supprime tout risque de dégradation de ce microprocesseur sous l'effet des vapeurs agressives formées lors des opérations ultérieures, en particulier au cours du dépôt d'un vernis sérigraphique séché aux U.V. La fiabilité de la carte à mémoire est ainsi notablement augmentée.

   Par ailleurs, étant donné que la carte à mémoire est réalisée à partir d'une feuille de matière plastique unique, sa structure est beaucoup plus simple que celle des cartes à mémoire connues, cette simplification de structure étant également favorable à l'égard de la fiablité. D'autre part, le procédé conforme à l'invention permet d'exécuter l'impression des deux faces de la carte, sans risque de déformation dans la zone de la piste magnétique, susceptible de perturber la lecture de celle-ci.

En outre, ce procédé étant donné qu'il peut être rendu entièrement automatique, y compris la mise en place des microprocesseurs est parfaitement adapté à une production industrielle en grande série des cartes à mémoire.

Bien entendu, l'invention n'est pas limitée aux exemples que l'on vient de décrire et on peut apporter à ceux-ci de nombreuses modifications sans sortir du cadre de l'invention.

Ainsi, la forme des cavités 6 peut être différente de celle décrite, pourvu que celle-ci soit adaptée à celle des microprocesseurs 27.

Par ailleurs, en ce qui concerne la mise en place des microprocesseurs 27, il est possible d'imaginer d'autres méthodes que celle décrite, évitant par exemple l'utilisation de la bande de support 26.

D'autre part, l'application du revêtement métallique 11 à l'intérieur de la cavité 6 de la carte peut être effectuée selon d'autres méthodes, telles que par dépôt chimique ou électro-chimique, pulvérisation sous vide et analogue, pourvu que ce revêtement soit suffisamment étanche au gaz formé lors de la fabrication de la carte.

## REVENDICATIONS

1. Procédé pour la fabrication de cartes à mémoire à partir d'une feuille de matière plastique (1) dans laquelle on incorpore un microprocesseur (27) sous forme de pastille, on applique sur l'une des faces de la feuille une piste magnétique (15) et on imprime sur l'autre face un texte, des chiffres et éventuellement un graphisme, caractérisé par les étapes suivantes :

   - on réalise dans une feuille (1) en matière thermoplastique, par thermo-emboutissage, une série de cavités (6) régulièrement espacées, destinées à recevoir chacune un microprocesseur (27) sous forme de pastille,

   - on dépose à l'intérieur des cavités (6) un revêtement métallique (11),

   - on applique par impression, des pistes magnétiques (15) sur la face de la feuille opposée aux cavités (6) et en regard de celles-ci,

   - on imprime l'autre face de la feuille,

   - on applique un vernis thermo-plastifiable (19, 20) sur les deux faces de la feuille (1), sauf dans les cavités (6),

   - on découpe les cartes à mémoire (10) dans la feuille ainsi obtenue,

   - on introduit et fixe dans les cavités (6) les microprocesseurs (27) en forme de pastille.

2. Procédé conforme à la revendication 1, caractérisé en ce que le revêtement métallique (11) appliqué à l'intérieur des cavités (6) est en aluminium, ou en alliage de nickel et de chrome.

3. Procédé conforme à l'une quelconque des revendications 1 ou 2, caractérisé en ce que le revêtement métallique (11) est appliqué à l'intérieur des cavités (6), par pression mécanique à chaud d'une pellicule métallique (11) portée par une feuille de matière plastique (12).

4. Procédé conforme à l'une des revendications 1 à 3, caractérisé en ce que lors de l'impression des pistes magnétiques (15), on presse sur l'autre face (1b) de la feuille (1) en matière plastique un support plan (17) comportant des tétons (18) engagés dans les cavités (6) et présentant une forme complémentaire de ces dernières.

5. Procédé conforme à l'une des revendications 1 à 4, caractérisé en ce qu'on fixe les microprocesseurs (27) en forme de pastille au fond des cavités (6) au moyen d'un adhésif (29).

6. Procédé conforme à l'une des revendications 1 à 5, caractérisé en ce que pour fixer les microprocesseurs (27) en forme de pastille dans les cavités (6), on procède comme suit :

- on place au-dessus des cartes (10) découpées dans la feuille (1), une bande (26) portant des microprocesseurs (27) régulièrement espacés,

- on déplace les cartes (10) en regard de cette bande (26) et dès qu'un microprocesseur (27) est situé au droit d'une cavité (6) d'une carte (10) on presse la bande (26) sur la carte pour pousser le microprocesseur (27) dans la cavité (6) et libérer celui-ci de la bande, puis on procède de la même façon pour les microprocesseurs et cartes suivants en déplaçant en continu la bande (26) et les cartes (10).

7. Procédé conforme à la revendication 6, caractérisé en ce que la bande (26) est fixée par collage sur la face des microprocesseurs (27) qui comporte des plots de contact (27a) en saillie.

8. Installation pour fixer automatiquement et en continu des microprocesseurs en forme de pastille dans les cartes (10) découpées obtenues selon le procédé conforme à l'une des revendications 1 à 7, caractérisé en ce qu'elle comprend des moyens (31) pour déplacer en continu sur un trajet sensiblement horizontal des cartes (10) découpées et munies d'une cavité (6) pour recevoir le microprocesseur (27) entre une entrée d'alimentation (32) des cartes et une sortie (33) de collecte des cartes terminées, des moyens (34) pour déposer un adhésif (29) au fond de la cavité (6) des cartes (10), des moyens (35, 40. 41) pour déplacer une bande (26) portant des microprocesseurs (27) régulièrement espacés au-dessus du trajet des cartes (10) et des moyens (28) pour presser cette bande (26) contre les cartes successives pour introduire le microprocesseur (27) dans chaque cavité (6) des cartes.

9. Installation conforme à la revendication 8, caractérisée en ce qu'elle comprend en outre des moyens (37) pour appliquer par sérigraphie un vernis de protection(19a) sur la face pourvue de plots de contact (27a) des microprocesseurs (27) introduits dans la cavité (6) de chaque carte et des moyens (38, 39) pour sécher ce vernis.

10. Carte à mémoire (10) comportant une feuille de matière plastique (1) dans laquelle est incorporé un microprocesseur (27) en forme de pastille, l'une (1a) des faces de la feuille comportant une piste magnétique (15) et l'autre face (1b) des incriptions et éventuellement un graphisme, caractérisée en ce que la feuille (1) comporte une cavité (6) dans laquelle est encastré le microprocesseur (27),le fond et la face latérale de cette cavité (6) étant revêtus par une couche métallique (11), en ce que la face du microprocesseur (27) opposée au fond de la cavité (6) est située sensiblement dans le prolongement de la face adjacente (1b) de la feuille et en ce que cette face ainsi que la face (1a) de la feuille portant la piste magnétique (15) sont recouverts par un revêtement en matière plastique (19, 20).

11. Carte à mémoire conforme à la revendication 10, caractérisée en ce que le microprocesseur (27) en forme de pastille est collé au fond de la cavité (6).

12. Carte à mémoire conforme à l'une des revendications 10 ou 11, caractérisée en ce que les plots de contacts (27a) du microprocesseur (27) sont noyés dans le revêtement en matière plastique (19a), à l'exception de leurs extrémités libres qui sont situées dans le prolongement de la surface extérieure (10a) dudit revêtement.

FIG_1

FIG_2

0132183

FIG_3

FIG_4

FIG.5

FIG_6

FIG_7

FIG_8

FIG_9

FIG_10

FIG_11

FIG_12

FIG_13

FIG_14

FIG_15

**Office européen des brevets**

## RAPPORT DE RECHERCHE EUROPEENNE

EP 84 40 1370

### DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. 3) |
|---|---|---|---|
| A | FR-A-2 337 381 (COMP. HONEYWELL BULL) <br> * page 3, ligne 8 - page 4, ligne 22; page 7, ligne 36 - page 8, ligne 13; page 9, lignes 7-20; page 10, ligne 2 - page 11, ligne 9; page 12, ligne 33 - page 14, ligne 14; figures 1,4-7,11 * | 1,5,6, 8,10 | G 06 K 19/06 |
| A | GB-A-2 100 669 (GAO GES. FÜR AUTOMATION UND ORGANISATION mbH) <br> * figures 1-4; page 1, lignes 60-115; page 2, lignes 56-59 * | 1,4-6, 10 | |
| A | EP-A-0 037 760 (SOC. FLONIC) <br> * figures 3-7; page 2, lignes 23-29; page 6, ligne 19 - page 7, ligne 31 * | 1,2 | |
| A | US-A-3 702 464 (CASTRUCCI) <br> * figure 2; colonne 4, lignes 38-61 * | 1,2 | DOMAINES TECHNIQUES RECHERCHES (Int. Cl. 3) <br><br> G 06 K 19/06 |
| A | EP-A-0 019 280 (GAO GES. FÜR AUTOMATION UND ORGANISATION mbH) | 1 | |
| A | DE-C-3 151 408 (GAO GES. FÜR AUTOMATION UND ORGANISATION mbH) | 1 | |

Le présent rapport de recherche a été établi pour toutes les revendications

| Lieu de la recherche | Date d'achèvement de la recherche | Examinateur |
|---|---|---|
| LA HAYE | 01-10-1984 | PESCHEL W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82